# EUROPEAN PATENT SPECIFICATION

(11) **EP 1 992 106 B1**
(45) Date of publication and mention of the grant of the patent: **13.08.2014**
(21) Application number: 07709036.3
(22) Date of filing: 21.02.2007
(51) Int. Cl.: H04L 12/16, H04L 12/28

(54) **METHOD AND APPARATUS FOR MANAGING AUDIO/VIDEO (AV) NETWORK**
VERFAHREN UND VORRICHTUNG ZUR VERWALTUNG EINES AUDIO-/VIDEO-(AV-)NETZWERKS
PROCÉDÉ ET APPAREIL DE GESTION DE RÉSEAU AUDIOVISUEL

(30) Priority: 22.02.2006 US 775361 P; 10.01.2007 KR 20070002981
(43) Date of publication of application: 19.11.2008
(73) Proprietor: Samsung Electronics Co., Ltd., Suwon-si, Gyeonggi-do, 443-742 (KR)
(72) Inventor: KIM, Hyun-Woo, Incheon 400-021 (KR); RYU, Young-Jae, Gyeonggi-do 448-550 (KR)
(74) Representative: Clark, David James
(86) International application number: PCT/KR2007/000887
(87) International publication number: WO 2007/097563

(56) References cited:
- EP-A1- 1 612 686
- EP-A2- 1 531 583
- WO-A1-2004/039005
- US-A1- 2002 100 052
- US-A1- 2004 107 255
- US-B1- 6 219 839
- US-B1- 6 816 904
- RITCHIE J ET AL: "UPnP AV Architecture: 0.83", DESIGN DOCUMENT MICROSOFT, XX, XX, 12 June 2002 (2002-06-12), pages 1-22, XP002271673,

## Description

### Technical Field

Methods and apparatuses consistent with the present invention relate to an audio/ video (AV) network, and more particularly, to a method and apparatus for managing an AV network.

### Background Art

Recently, with the advancements in broadcasting technologies, the implementation of digital broadcasting through satellite, terrestrial and cable broadcasting, has gradually increased. In order to receive digital broadcasts provided by a broadcast service provider, a user needs a broadcast receiving apparatus such as a set-top box or a digital television (TV). In digital broadcasting, video and audio streams are compressed into digital information and transmitted accordingly. Then, a broadcast receiving apparatus, which receives the digital information, decompresses the digital information into the video and audio streams and outputs them to a user.

Set-top boxes and digital TVs, which have been developed to receive and output digital broadcasts, provide various functions unavailable in related art analog TVs.

For example, a digital broadcast includes an electronic program guide (EPG), which provides information regarding broadcast programs, in addition to video and audio information. Therefore, users can obtain various information regarding broadcast programs according to day, channel, and time.

In addition, a time shift function has been introduced to broadcast receiving apparatuses. The time shift function enables a broadcast receiving apparatus, such as a set-top box or a digital TV, to extract a specific bitstream from received broadcast streams, store the extracted bitstream in a memory embedded therein, and play the stored bitstream at the request of a user. When the time shift function is used, the broadcast receiving apparatus can record broadcast content while a user is away. Later, if the user desires to watch a specific broadcast content, the broadcast receiving apparatus can seamlessly provide the user with the broadcast content from the recorded broadcast content in real time.

### Disclosure of Invention

### Technical Problem

Recently, an audio/video (AV) system having a content storage apparatus separated from a broadcast receiving apparatus rather than having a memory embedded in the broadcast receiving apparatus has been implemented. In this case, since the number of AV apparatuses that form an AV network has increased, a technology for more efficiently managing the AV network is required. In particular, a plurality of AV apparatuses of the same kind may exist in an AV network, such as in the case of homes having two or more digital TVs. Accordingly, the importance of the technology for managing the AV network is growing. EP1612686 describes a device and method to enable improved control of streaming live delivery and recording processing as to a client from a server of tuner received content. This is configured such that a tuner control instance which executes streaming delivery of the tuner-received content under the control of the tuner, and a storage unit control instance which executes recording of the tuner-received content under the control of the content storage unit such as hard disk, are independently set, and to each a channel list URL and video capsule URL are set as the content URL capable of specifying the processing control object, and requests can be received from the client individually by setting a control instance ID which is a control instance (AVT instance) identifier, By this configuration, independent processing according to the client request is enabled.

### Technical Solution

The present invention provides a method and apparatus as defined in the appended claims for more efficiently managing an audio/video (AV) network.

### Description of Drawings

The above and other aspects of the present invention will become more apparent by describing in detail exemplary embodiments thereof with reference to the attached drawings in which:
FIG. 1 illustrates an audio/video (AV) system according to an exemplary embodiment of the present invention;
FIG. 2 is a flowchart illustrating a process of forming an AV session between a content output apparatus and a broadcast receiving apparatus and a process of setting an operating mode;
FIG. 3 is a flowchart illustrating a process of changing an operating mode according to an exemplary embodiment of the present invention;
FIG. 4 is a flowchart illustrating a process of changing a source device according to an exemplary embodiment of the present invention;
FIG. 5 is a flowchart illustrating a process of applying a time shift function according to an exemplary embodiment of the present invention;
FIG. 6 is a flowchart illustrating a process of storing broadcast content according to an exemplary embodiment of the present invention;
FIG. 7 is a flowchart illustrating a process of playing broadcast content stored in a content storage apparatus according to an exemplary embodiment of the present invention;
FIG. 8 is a flowchart illustrating a process of generating a bookmark according to an exemplary embodiment of the present invention;
FIG. 9 illustrates bookmark information according to an exemplary embodiment of the present invention;
FIG. 10 is a flowchart illustrating a process of playing a bookmark according to an exemplary embodiment of the present invention;
FIG. 11 is a flowchart illustrating a process of deleting broadcast content according to an exemplary embodiment of the present invention;
FIG. 12 is a flowchart illustrating a process of sharing broadcast content according to an exemplary embodiment of the present invention;
FIG. 13 is a block diagram of a broadcast receiving apparatus according to an exemplary embodiment of the present invention;
FIG. 14 is a block diagram of a content output apparatus according to an exemplary embodiment of the present invention; and
FIG. 15 is a block diagram of a content storage apparatus according to an exemplary embodiment of the present invention.

### Mode for Invention

The present invention will now be described more fully with reference to the accompanying drawings, in which exemplary embodiments of the invention are shown. The invention may, however, be embodied in many different forms and should not be construed as being limited to the exemplary embodiments set forth herein; rather, these exemplary embodiments are provided so that this disclosure will be thorough and complete, and will fully convey the concept of the invention to those skilled in the art. Like reference numerals in the drawings denote like elements, and thus their description will be omitted.

Hereinafter, the present invention will be described in detail with reference to the accompanying drawings.

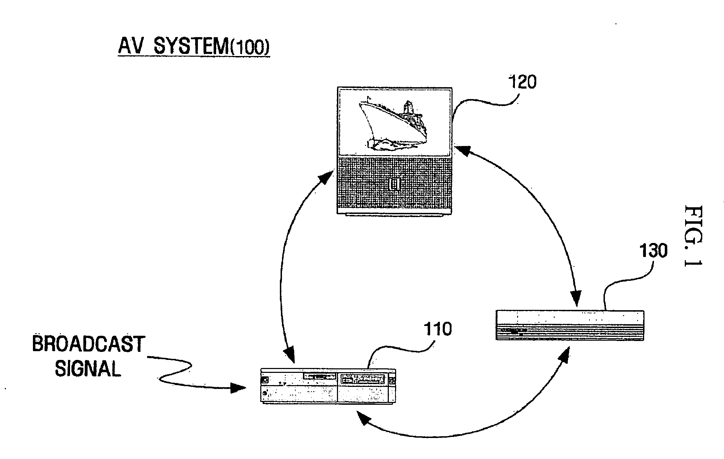

FIG. 1 illustrates an audio/video (AV) system 100 according to an exemplary embodiment of the present invention.

Referring to FIG. 1, the AV system 100 includes one or more AV apparatuses (110, 120, and 130). The AV apparatuses can perform at least one of functions of restoring, playing and storing AV data. Examples of the AV apparatuses may include a broadcast receiving apparatus 110, a content output apparatus 120, and a content storage apparatus 130.

The broadcast receiving apparatus 110 receives broadcast signals and restores broadcast content from the received broadcast signals. The broadcast content is a broadcast program, such as a movie, a soap opera or news, which is provided by a broadcasting station. The broadcast content may include at least one of video data, audio data, and additional data. Examples of the additional data may include an electronic program guide (EPG), securities information and weather information. The broadcast signals may be transmitted over a cable, terrestrial or satellite network. Alternatively, the broadcast signals may be transmitted over a network such as the Internet. The broadcast receiving apparatus 110 transmits the restored broadcast content to the content output apparatus 120 and the content storage apparatus 130. The broadcast receiving apparatus 110 may be a set-top box or a network interface unit (NIT), but is not limited thereto.

The content output apparatus 120 outputs broadcast content to a user. To this end, the content output apparatus 120 may include a speaker (not shown) outputting audio and a display (not shown) outputting video. The content output apparatus 120 may obtain the broadcast content from the broadcast receiving apparatus 110 or the content storage apparatus 130. The content output apparatus 120 may be a digital television (TV), a projector, or a monitor. However, the content output apparatus 120 is not limited thereto.

The content storage apparatus 130 stores the broadcast content received from the broadcast receiving apparatus 110. When requested, the content storage apparatus 130 may provide the stored broadcast content to the content output apparatus 120. The content storage apparatus 130 may also store bookmark information or other data. The content storage apparatus 130 may be implemented using an AV hard disk drive (HDD), but is not limited thereto.

According to an exemplary embodiment of the present invention, the AV system 100 may form an AV network centering around the content output apparatus 120. In this case, the content output apparatus 120 may function as an interface between the user and the AV network. That is, when the user inputs a control request to the content output apparatus 120, the content output apparatus 120 may deliver the control request to a corresponding AV apparatus.

The content output apparatus 120 may display a user interface guiding the control of the AV network. Therefore, the user may control the AV network using the user interface. For example, when desiring to record broadcast content, the user may request the content output apparatus 120 to display the user interface. If the content output apparatus 120 displays the user interface, the user may select a Record menu provided by the user interface, thereby instructing the content storage apparatus 130 to record the broadcast content. In order to use the user interface, the user needs an input unit such as buttons or a remote control included in the content output apparatus 120.

According to an exemplary embodiment of the present invention, the user may also control the AV network without using the user interface, but using function buttons included in a remote control. For example, if a remote control includes a function button for instructing the execution of a recording function, the user may press the function button in order to request the recording of broadcast content.

One AV network may include one or more broadcast receiving apparatuses 110, content output apparatuses 120, and content storage apparatuses 130. Hence, there can be a scenario where a plurality of users receive AV services using different content output apparatuses in a single AV network.

According to an exemplary embodiment of the present invention, the content output apparatus 120 may operate in any one of its operating modes, i.e., an active mode and a passive mode, for the broadcast receiving apparatus 110. The active mode denotes a state in which the content output apparatus 120 has authority to control the broadcast receiving apparatus 110. The passive mode denotes a state in which the content output apparatus 120 has no authority to control the broadcast receiving apparatus 110. Therefore, when in the active mode, if the content output apparatus 120 requests the broadcast receiving apparatus 110 to switch channels or perform a time shift function, the broadcast receiving apparatus 110 may perform a corresponding operation. However, when in the passive mode, if the content output apparatus 120 requests the broadcast receiving apparatus 110 to perform an operation, the broadcast receiving apparatus 110 may not perform the requested operation.

It may be the content output apparatus 120 or the broadcast receiving apparatus 110 which determines whether the content output apparatus 120 can control the broadcast receiving apparatus 110 based on an operating mode of the content output apparatus 120.

If it is the content output apparatus 120 that makes the determination, the content output apparatus 120 may determine its operating mode when the user inputs a request (for example, a channel switch request or a time shift function request) to control the broadcast receiving apparatus 110. If the content output apparatus 120 determines that its operating mode is the active mode, the content output apparatus 120 may transmit the request of the user to the broadcast receiving apparatus 110. However, if the content output apparatus 120 determines that its operating mode is the passive mode, the content output apparatus 110 may not transmit the request of the user to the broadcast receiving apparatus 110 and inform the user that its operating mode is the passive mode.

If it is the broadcast receiving apparatus 110 that makes the determination, when the content output apparatus 120 receives the request to control the broadcast receiving apparatus 110 from the user, it transmits the request to the broadcast receiving apparatus 110. Here, the broadcast receiving apparatus 110 may determine the operating mode of the content output apparatus 120. If the broadcast receiving apparatus 110 determines that the content output apparatus 120 is in the active mode, it may perform an operation corresponding to the request of the user. However, if the broadcast receiving apparatus 110 determines that the content output apparatus 120 is in the passive mode, it may not perform the operation corresponding to the request of the user and transmit a reply message to the content output apparatus 120 in order to indicate that the request is not acceptable. Here, the content output apparatus 120 may inform the user that its operating mode is the passive mode.

Hereinafter, exemplary embodiments of the present invention will be described based on a case where the content output apparatus 110 determines its operating mode. However, the present invention is not limited thereto.

According to an exemplary embodiment of the present invention, the active mode or the passive mode may be determined according to an order in which the content output apparatus 120 forms an AV session with the broadcast receiving apparatus 110. The AV session denotes a transmission channel of AV data (e.g., broadcast content). That is, forming an AV session denotes establishing a relationship between a source device, which provides AV data, and a sink device which obtains the AV data from the source device.

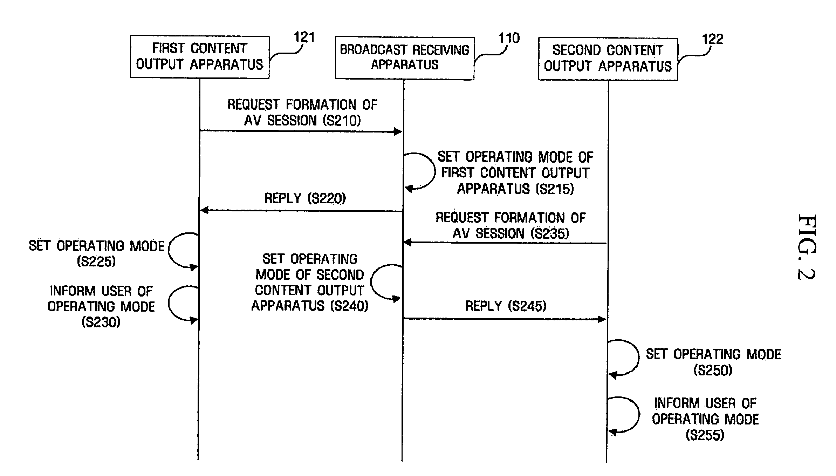

A process of forming an AV session between the content output apparatus 120 and the broadcast receiving apparatus 110 and a process of setting an operating mode will now be described in more detail with reference to FIG. 2. A flowchart illustrated in FIG. 2 is based on an AV network which is composed of a first content output apparatus 121, a second content output apparatus 122, and a broadcast receiving apparatus 110.

First of all, the first content output apparatus 121 requests the broadcast receiving apparatus 110 to form an AV session (operation S210). To this end, the first content output apparatus 121 may generate a message for requesting the formation of the AV session and transmit the generated message to the broadcast receiving apparatus 110.

Since no AV apparatus has formed an AV session with the broadcast receiving apparatus 110, the broadcast receiving apparatus 110 sets the first content output apparatus 121 as an AV apparatus in the active mode (operation S215). Then, the broadcast receiving apparatus 110 responds to the request of the first content output apparatus 121 to form the AV session (operation S220). Here, the broadcast receiving apparatus 110 may generate a reply message containing information regarding the operating mode of the first content output apparatus 121 and transmit the generated reply message to the first content output apparatus 121.

Consequently, the AV session may be established between the broadcast receiving apparatus 110 and the first content output apparatus 121, and the broadcast receiving apparatus 110 may transmit broadcast content that it has restored from broadcast signals to the first content output apparatus 121.

The first content output apparatus 121 may identify its operating mode for the broadcast receiving apparatus 110 based on the reply message. The first content output apparatus 121 sets its operating mode to the identified operating mode (operation S225) and informs a user of the set operating mode (operation S230). To inform the set operating mode, the first content output apparatus 121 may output an event sound or display an event message.

After the first content output apparatus 121 forms the AV session with the broadcast receiving apparatus 110, the second content output apparatus 122 may request the broadcast receiving apparatus 110 to form an AV session (operation S235). To this end, the second content output apparatus 122 may generate a message for requesting the formation of the AV session and transmit the generated message to the broadcast receiving apparatus 110.

Since the broadcast receiving apparatus 110 has already formed the AV session with the first content output apparatus 121, it sets the operating mode of the second content output apparatus 122 to the passive mode (operation S240). Then, the broadcast receiving apparatus 110 responds to the request of the second content output apparatus 122 to form the AV session (operation S245). To this end, the broadcast receiving apparatus 110 may generate a reply message containing information regarding the operating mode of the second content output apparatus 122 and transmit the generated reply message to the second content output apparatus 122.

Consequently, the AV session may be established between the broadcast receiving apparatus 110 and the second content output apparatus 122, and the broadcast receiving apparatus 110 may transmit broadcast content that it has restored from broadcast signals to the second content output apparatus 122.

The second content output apparatus 122 may identify its operating mode for the broadcast receiving apparatus 110 based on the reply message. The second content output apparatus 122 sets its operating mode to the identified operating mode (operation S250) and informs the user of the set operating mode (operation S255). To inform the set operating mode, the second content output apparatus 122 may output an event sound or display an event message.

After the above process is performed, the broadcast receiving apparatus 110 may receive a control request, such as a channel switch request, from the first content output apparatus 121 or the second content output apparatus 122. In this case, the broadcast receiving apparatus 110 may identify the operating mode of the first or second content output apparatus 121 or 122 that it has set and determine whether to perform an operation corresponding to the received control request.

A method of determining the active mode or the passive mode is not limited to the exemplary embodiment illustrated in FIG. 2. For example, a user may prioritize a plurality of content output apparatuses. In this case, regardless of an order in which the content output apparatuses form AV sessions with the broadcast receiving apparatus 110, a content output apparatus with the highest priority among content output apparatuses, which have formed AV sessions with the broadcast receiving apparatus 110, may operate in the active mode, and the other content output apparatuses may operate in the passive mode.

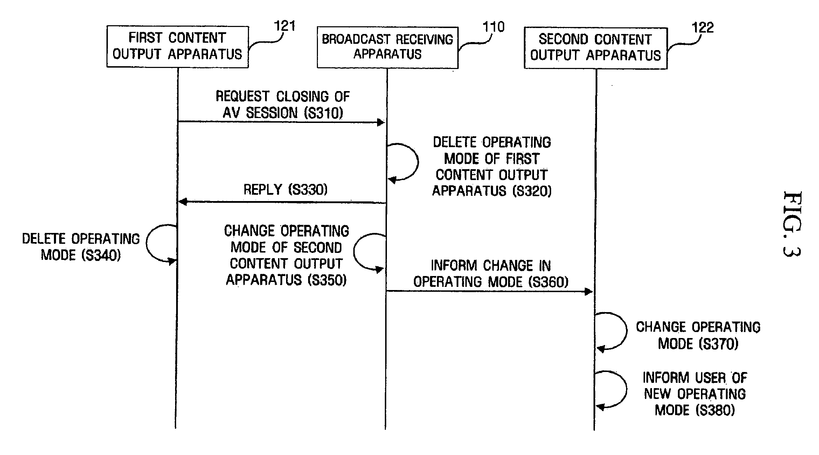

When an AV session between a content output apparatus and a broadcast receiving apparatus is closed, the operating mode of the content output apparatus for the broadcast receiving apparatus may change. FIG. 3 is a flowchart illustrating a process of changing an operating mode according to an exemplary embodiment of the present invention. The process illustrated in FIG. 3 is based on a case where the first content output apparatus 121 operates in the active mode and the second content output apparatus 122 operates in the passive mode as a result of the process illustrated in FIG. 2.

The first content output apparatus 121 requests the broadcast receiving apparatus 110 to close an AV session (operation S310). To this end, the first content output apparatus 121 may generate a message for requesting the closing of the AV session and transmit the generated message to the broadcast receiving apparatus 110.

The broadcast receiving apparatus 110, which has been requested to close the AV session, deletes information regarding the operating mode of the first content output apparatus 121 that it has set (operation S320) and responds to the request of the first content output apparatus 121 to close the AV session (operation S330). In operation S330, the broadcast receiving apparatus 110 may generate a reply message and transmit the generated reply message to the first content output apparatus 121.

After receiving the reply message from the broadcast receiving apparatus 110, the first content output apparatus 121 deletes its operating mode which was set in operation S225 of FIG. 2 (operation S340).

Then, the broadcast receiving apparatus 110 changes the operating mode of the second content output apparatus 122 from the passive mode to the active mode (operation S350) and informs the second content output apparatus 122 of the change in the operating mode (operation S360). In operation S360, the broadcast receiving apparatus 110 may generate a message for informing the change in the operating mode and transmit the generated message to the second content output apparatus 122.

The second content output apparatus 122 changes its operating mode, which was set in operation S250 of FIG. 2 (operation S370), and informs the user of a new operating mode (operation S380).

If no AV session has been formed between the broadcast receiving apparatus 110 and the second content output apparatus 122, operations S350 through S380 of FIG. 3 may not be performed. In addition, if one or more content output apparatuses in addition to the second content output apparatus 122 have formed AV sessions with the broadcast receiving apparatus 110, operations S350 through S380 may be performed on a content output apparatus which has first formed an AV session with the broadcast receiving apparatus 110.

Hereinafter, scenarios of using an AV network according to various exemplary embodiments of the present invention will be described.

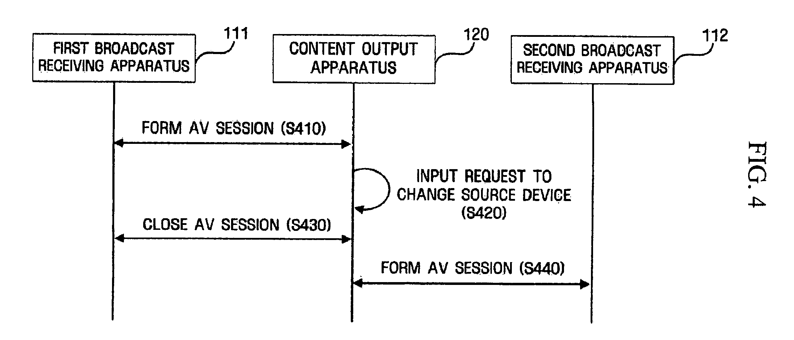

FIG. 4 is a flowchart illustrating a process of changing a source device according to an exemplary embodiment of the present invention. The present exemplary embodiment is based on an AV network which is composed of a first broadcast receiving apparatus 111, a second broadcast receiving apparatus 112, and a content output apparatus 120. The first broadcast receiving apparatus 111 receives terrestrial broadcasts, and the second broadcast receiving apparatus 112 receives satellite broadcasts.

The content output apparatus 120 forms an AV session with the first broadcast receiving apparatus 111 (operation S410). That is, the content output apparatus 120 uses the first broadcast receiving apparatus 111 as a source device. In this case, the first broadcast receiving apparatus 111 may restore broadcast content from broadcast signals transmitted over a terrestrial network, and the content output apparatus 120 may receive the restored broadcast content from the first broadcast receiving apparatus 111 and output the received broadcast content to a user.

While watching terrestrial broadcasts, if the user desires to watch satellite broadcasts, the user has to change the source device of the content output apparatus 120. For this, the user may call a user interface, which guides the control of the AV network, using a remote control. When receiving a user interface request signal, the content output apparatus 120 may display the user interface, and the user may select the second broadcast receiving apparatus 112 as the source device through the user interface.

When a request to select the second broadcast receiving apparatus 112 as the source device is input (operation S420), the content output apparatus 120 closes an AV session with the first broadcast receiving apparatus 111 (operation S430) and forms an AV session with the second broadcast receiving apparatus 112 (operation S440). If the power of the second broadcast receiving apparatus 112 is off, the second broadcast receiving apparatus 112 may be automatically turned on when receiving a message for requesting the formation of the AV session from the content output apparatus 120. Since the AV session is formed between the second broadcast receiving apparatus 112 and the content output apparatus 120, the user can watch the satellite broadcasts.

A broadcast receiving apparatus may transmit broadcast content not only to a content output apparatus, but also to a content storage apparatus. Preferably, when a channel switch request is not received for a threshold time, the broadcast receiving apparatus may transmit the broadcast content to the content storage apparatus. The threshold time may be set to an average time taken from when a user inputs a channel switch request to when the user inputs a next channel switch request using a channel switch button of the remote control while continuously switching channels to browse the channels. The threshold time may be set through sample experiments on a plurality of users. Accordingly, the content storage apparatus may store broadcast content of a channel selected and being watched by a user and may not store broadcast content while the user is browsing the channels. In this case, storing of broadcast content may be automatically performed without the request of the user. The broadcast content thus stored may be used to implement the time shift function. Hereinafter, storing broadcast content in order to implement the time shift function will be referred to as 'backing up.'

A storage region (hereinafter, referred to as a backup region) used by the content storage apparatus to implement the time shift function may be logically or physically separated from storage regions that store other data. Therefore, if the backup region is saturated, the content storage apparatus may delete backup data from the backup region in order from the oldest backup data and thus secure storage space. Then, the content storage apparatus may back up new broadcast content in the secured storage space.

In the exemplary embodiment of the present invention, the time shift function refers to a function in which the content storage apparatus 130 backs up broadcast content restored by the broadcast receiving apparatus 110 from received broadcast signals and the content output apparatus 120 provides the broadcast content stored in the content storage apparatus 130 to a user at the user's request. Therefore, the broadcast content provided to the user according to the time shift function is later than the broadcast content included in the broadcast signals which are received by the broadcast receiving apparatus 110. The time shift function includes detailed functions such as pause, rewind and fast-forward functions of broadcast content, and a play function of previous broadcast content.

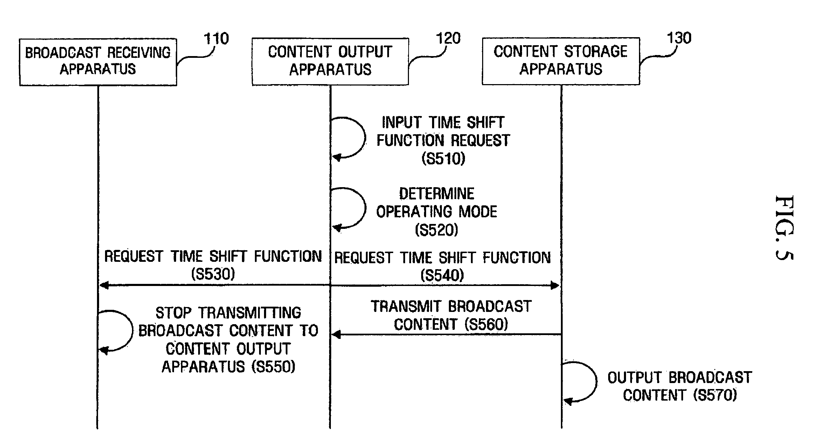

FIG. 5 is a flowchart illustrating a process of applying a time shift function according to an exemplary embodiment of the present invention.

When a user inputs a time shift function request (operation S510), the content output apparatus 120 determines its operating mode (operation S520). If the content output apparatus 120 determines that its operating mode is the active mode, it requests the broadcast receiving apparatus 110 and the content storage apparatus 130 to perform the time shift function (operations S530 and 540). Here, the content output apparatus 120 may generate a time shift function request message and transmit the generated time shift function request message to the broadcast receiving apparatus 110 and the content storage apparatus 130.

When requested by the content output apparatus 120 to perform the time shift function, the broadcast receiving apparatus 110 stops transmitting broadcast content to the content output apparatus 120 (operation S550). In addition, when requested by the content output apparatus 120 to perform the time shift function, the content storage apparatus 130 transmits broadcast content backed-up in a backup region to the content output apparatus 120 (operation S560). From which portion of the broadcast content backed-up in the backup region shall be transmitted by the content storage apparatus 130 to the content output apparatus 120 may be determined by a request type (such as the pause, rewind, or fast-forward function) of the time shift function.

After receiving the broadcast content from the content storage apparatus 130, the content output apparatus 120 outputs the received broadcast content to the user (operation S570).

While the process illustrated in FIG. 5 is performed, the content storage apparatus 130 continues to receive broadcast content from the broadcast receiving apparatus 110 and back up the received broadcast content in the backup region.

Although not shown in FIG. 5, if the content output apparatus 120 determines in operation S520 that its operating mode is the passive mode, the content output apparatus 120 may inform the user that it cannot execute the user's request. For example, the content output apparatus 120 may output information indicating that its operating mode is the passive mode to the user. In this case, operations S530 through S570 of FIG. 5 may not be performed.

While the process illustrated in FIG. 5 is performed, if a channel switch request is input from the user, the content output apparatus 120 may request the broadcast receiving apparatus 110 to switch channels and may request the content storage apparatus 130 to stop the time shift function. Here, the broadcast receiving apparatus 110 changes a channel for receiving broadcast signals to a requested channel through a channel tuning operation, restores broadcast content from broadcast signals received through the requested channel, and transmits the restored broadcast content to the content output apparatus 120. In addition, the content storage apparatus 130 may stop transmitting broadcast content to the content output apparatus 120.

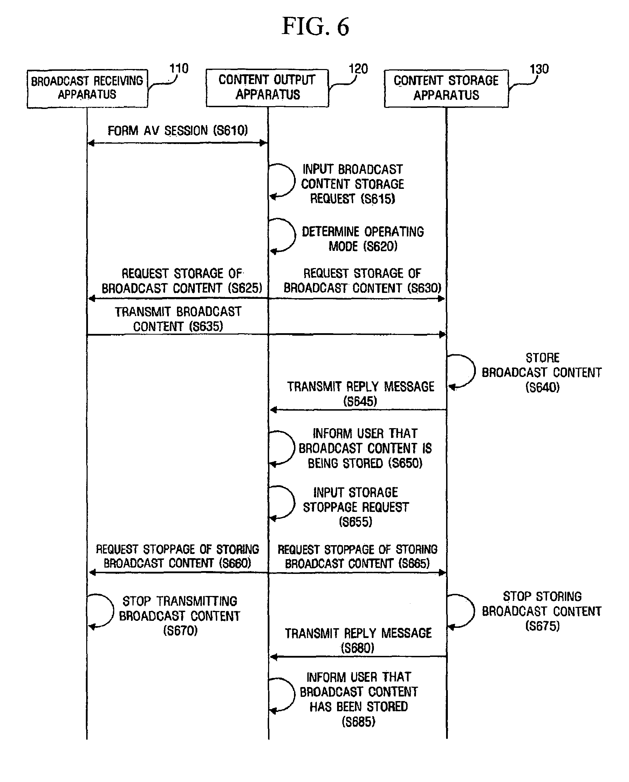

FIG. 6 is a flowchart illustrating a process of storing broadcast content according to an exemplary embodiment of the present invention. The process of storing the broadcast content according to the present exemplary embodiment is different from the process in which the content storage apparatus 130 temporarily backs up broadcast content in a backup region in order to implement the time shift function. In the present exemplary embodiment, the content storage apparatus 130 stores and manages broadcast content in a single independent moving-image file. That is, the content storage apparatus 130 does not arbitrarily delete broadcast content, which has been stored therein through the process of FIG. 6 unless there is an explicit deletion request.

First of all, the content output apparatus 120 forms an AV session with the broadcast receiving apparatus 110 (operation S610). In this case, the content output apparatus 120 receives broadcast content from the broadcast receiving apparatus 110 and outputs the received broadcast content to a user.

When the user inputs a request to store broadcast content (operation S615), the content output apparatus 120 determines its operating mode (operation S620). If the content output apparatus 120 determines that its operating mode is the active mode, it requests the broadcast receiving apparatus 110 and the content storage apparatus 130 to store the broadcast content (operations S625 and S630). To this end, the content output apparatus 120 may generate a storage request message and transmit the generated storage request message to the broadcast receiving apparatus 110 and the content storage apparatus 130.

If a plurality of content storage apparatuses exist within an AV network, the user may select the content storage apparatus 130 to store broadcast content using the user interface provided by the content output apparatus 120. In this case, an identifier of the content storage apparatus 130 selected by the user may be transmitted to the broadcast receiving apparatus 110. For example, in operation S625, the content output apparatus 120 may include the identifier of the content storage apparatus 130, which is to store the broadcast content, in the storage request message and transmit the storage request message to the broadcast receiving apparatus 110. If only one content storage apparatus exists in the AV network, the content output apparatus 120 may not provide the identifier of the content storage apparatus 130 to the broadcast receiving apparatus 110.

At the request of the content output apparatus 120, the broadcast receiving apparatus 110 forms an AV session with the content storage apparatus 130, which is to store the broadcast content, and transmits the broadcast content to the content storage apparatus 130 (operation S635). If the AV session has already been formed between the broadcast receiving apparatus 110 and the content storage apparatus 130, there is no need to form an additional AV session.

The content storage apparatus 130 stores the broadcast content received from the broadcast receiving apparatus 110 (operation S640) and transmits a reply message to the content output apparatus 120 in order to indicate that the broadcast content is being stored normally (operation S645). Operations S635 and S640 are repeated until the process of storing the broadcast content is stopped. In addition, operation S645 may be periodically performed while the content storage apparatus 130 stores the broadcast content.

After receiving the reply message from the content storage apparatus 130, the content output apparatus 120 informs the user that the broadcast content is being stored (operation S650). For example, the content output apparatus 120 may output a sound or display a message in order to indicate that the broadcast content is being stored.

While the broadcast content is being stored in the content storage apparatus 130, the user may request the content storage apparatus 130 to stop storing the broadcast content. If the user inputs a storage stoppage request (operation S655), the content output apparatus 120 requests the broadcast receiving apparatus 110 and the content storage apparatus 130 to stop storing the broadcast content (operations S660 and 665). In operations S660 and S665, the content output apparatus 120 may generate a storage stoppage request message and transmit the generated storage stoppage request message to the broadcast receiving apparatus 110 and the content storage apparatus 130.

Then, the broadcast receiving apparatus 110 stops storing the broadcast content in the content storage apparatus 130 (operation S670). In addition, the content storage apparatus 130 stops storing the broadcast content (operation S675) and transmits a reply message to the content output apparatus 120 in response to the storage stoppage request (operation S680). The reply message transmitted in operation S680 may include information regarding the stored broadcast content, such as a file name, a file size, and a storage location. The file name may be generated arbitrarily by the content storage apparatus 130 and may later be edited by the user.

The content output apparatus 120, which receives the reply message, informs the user that the storing of the broadcast content has been completed (operation S685). Here, the content output apparatus 120 may display the information regarding the stored broadcast content.

Although not shown in FIG. 6, if the content output apparatus 120 determines in operation S620 that its operating mode is the passive mode, it may inform the user that the broadcast content cannot be stored or it cannot execute the user's request. For example, the content output apparatus 120 may inform the user that its operating mode is the passive mode. In this case, operations S625 through S670 of FIG. 6 are not performed.

If the content output apparatus 120 operates in the passive mode, the broadcast receiving apparatus 110 may switch channels under the control of a content output apparatus which operates in the active mode while the broadcast content is being stored. In this case, since the broadcast receiving apparatus 110 can no longer provide broadcast content of a previous channel, the storing of the broadcast content may be terminated abnormally. Therefore, if the content output apparatus 120 is in the passive mode, it is desirable to prevent the content output apparatus 120 from storing the broadcast content.

If the content storage apparatus 130 which backs up broadcast content and the content storage apparatus 130 which stores the broadcast content through the process of FIG. 6 are identical, the content storage apparatus 130 may stop backing up the broadcast content in the backup region while storing the broadcast content through the process of FIG. 6. The content storage apparatus 130 may resume backing up the broadcast content after a threshold time from when storing of the broadcast content was stopped. However, the present invention is not limited thereto. For example, the content storage apparatus 130 may store broadcast content independently of backing up the broadcast content in the backup region. That is, while storing broadcast content through the process of FIG. 6, the content storage apparatus 130 may continue to back up the broadcast content in the backup region.

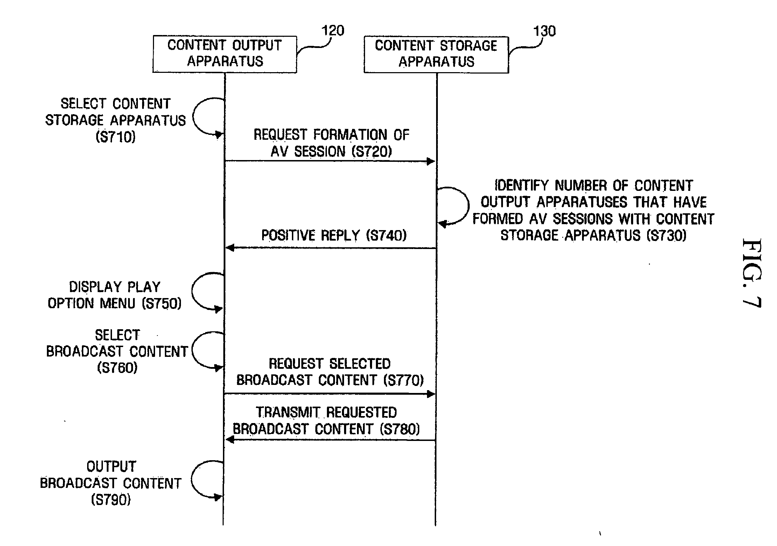

FIG. 7 is a flowchart illustrating a process of playing broadcast content stored in the content storage apparatus 130 according to an exemplary embodiment of the present invention. The process illustrated in FIG. 7 may be performed after the content storage apparatus 130 stores broadcast content in the process of FIG. 6.

When desiring to play the broadcast content stored in the content storage apparatus 130, a user may call the user interface provided by the content output apparatus 120 and select the content storage apparatus 130 using the user interface. If the content storage apparatus 130 is selected (operation S710), the content output apparatus 120 requests the content storage apparatus 130 to form an AV session (operation S720). In operation S720, the content output apparatus 120 may generate a message for requesting the formation of the AV session and transmit the generated message to the content storage apparatus 130.

According to an exemplary embodiment of the present invention, the number of content output apparatuses that can simultaneously access a content storage apparatus may be limited. The number of content output apparatuses that can simultaneously access a content storage apparatus may vary according to the performance of the content storage apparatus, such as the number of interfaces included in the content storage apparatus or computation power of the content storage apparatus, or an AV network environment.

After a request by the content output apparatus 120 to form the AV session, the content storage apparatus 130 identifies the number of content output apparatuses with which it has formed AV sessions (operation S730). If the number of content output apparatuses that have formed the AV sessions with the content storage apparatus 130 is less than a maximum access allowable number, the content output apparatus 120 may be allowed to access the content storage apparatus 130. In this case, the content storage apparatus 130 transmits to the content output apparatus 120 a play option menu and a positive reply to the request for the formation of the AV session (operation S740). In operation S730, the content storage apparatus 130 may generate a reply message including the play option menu and transmit the generated reply message to the content output apparatus 120. The play option menu includes a list of broadcast content and history information stored in the content storage apparatus 130. The history information may include information regarding broadcast content which has most recently been played and information regarding broadcast content which has most recently been stored among the broadcast content stored in the content storage apparatus 130.

The content output apparatus 120 displays the play option menu received from the content storage apparatus 130 (operation S750). The user may select desired broadcast content in the play option menu displayed on the content output apparatus 120.

If the user selects specific broadcast content (operation S760), the content output apparatus 120 requests the content storage apparatus 130 to provide the selected broadcast content (operation S770). Then, the content storage apparatus 130 transmits the requested broadcast content to the content output apparatus 120 (operation S780). In this case, the requested broadcast content may be transmitted using a streaming method.

The content output apparatus 120 outputs the broadcast content received from the content storage apparatus 130 to the user (operation S790).

Although not shown in FIG. 7, if the content storage apparatus 130 determines in operation S730 that the number of content output apparatuses with which it has formed the AV sessions is equal to the maximum access allowable number, the content storage apparatus 130 may transmit to the content output apparatus 120 a negative reply to the request for the formation of the AV session. In this case, the content storage apparatus 130 may generate a message indicating that the AV session cannot be formed and transmit the generated message to the content output apparatus 120. The content output apparatus 120, which receives the negative reply from the content storage apparatus 130, may inform the user that it cannot access the content storage apparatus 130.

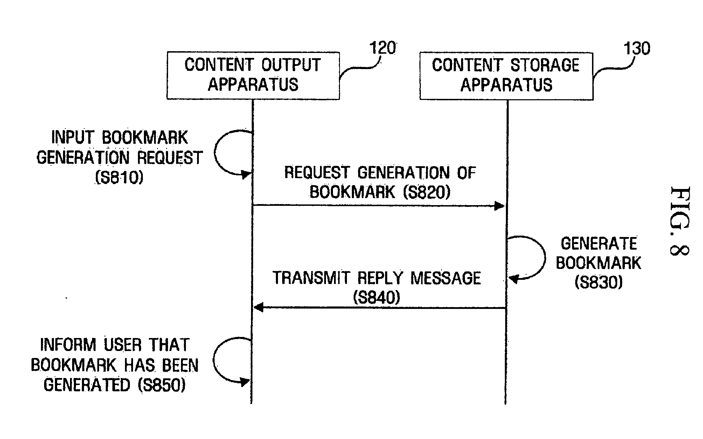

FIG. 8 is a flowchart illustrating a process of generating a bookmark according to an exemplary embodiment of the present invention.

While the content output apparatus 120 is outputting broadcast content stored in the content storage apparatus 130, if a user inputs a bookmark generation request (operation S810), the content output apparatus 120 requests the content storage apparatus 130 to generate a bookmark (operation S820). In operation S820, the content output apparatus 120 may generate a bookmark generation request message including information regarding a play position and transmit the bookmark generation request message to the content storage apparatus 120.

The content storage apparatus 130 generates a bookmark (operation S830). For example, the content storage apparatus 130 may store the information regarding the play position, which has been received from the content output apparatus 120, to correspond to broadcast content which is being transmitted to the content output apparatus 120.

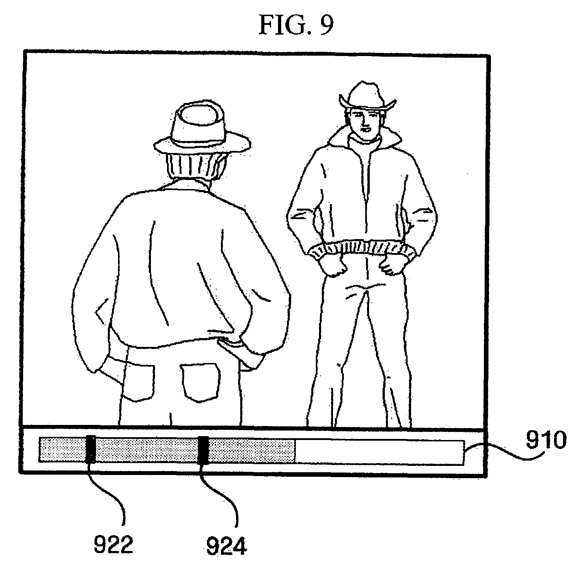

If the bookmark is generated, the content storage apparatus 130 transmits to the content output apparatus 120 a reply message to the bookmark generation request (operation S840). Here, the content output apparatus 120 informs the user that the bookmark has been generated normally (operation S850). For example, as illustrated in FIG. 9, the content output apparatus 120 may display icons 922 and 924 indicating positions at which bookmarks are generated on a progress bar 910. The progress bar 910 represents the play status of broadcast content.

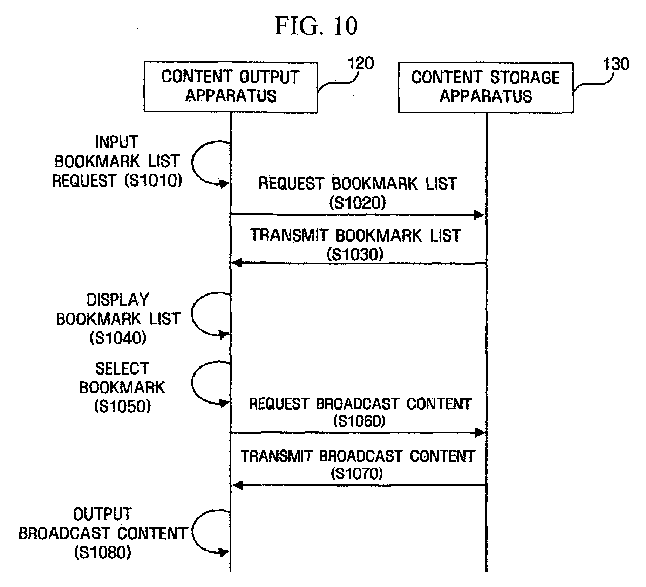

FIG. 10 is a flowchart illustrating a process of playing a bookmark according to an exemplary embodiment of the present invention.

When a user inputs a request for a list of bookmarks stored in the content storage apparatus 130 (operation S1010), the content output apparatus 120 requests the content storage apparatus 130 to provide the list (operation S1020). In this case, the content output apparatus 120 may generate a bookmark list request message and transmit the generated bookmark list request message to the content storage apparatus 130.

The content storage apparatus 130 transmits to the content output apparatus 120 the list including information regarding the bookmarks stored therein (operation S1030). The list may include detailed information such as identifiers of bookmarks, times when the bookmarks were generated, and titles of broadcast content associated with the bookmarks.

The content output apparatus 120 displays the list received from the content storage apparatus 130 (operation S1040). The user may select a desired bookmark from the displayed list. If the user selects a specific bookmark (operation S1050), the content output apparatus 120 requests the content storage apparatus 120 to transmit broadcast content from a portion indicated by the selected bookmark (operation S1060). In this case, the content output apparatus 120 may generate a message for requesting the transmission of broadcast content, the message including information (for example, identifier of bookmarks) regarding the bookmarks and transmit the generated message to the content storage apparatus 130.

At the request of the content output apparatus 120, the content storage apparatus 130 transmits the broadcast content to the content output apparatus from the portion indicated by the bookmark selected by the user (operation S1070).

The content output apparatus 120 outputs the broadcast content received from the content storage apparatus 130 to the user (operation S1080).

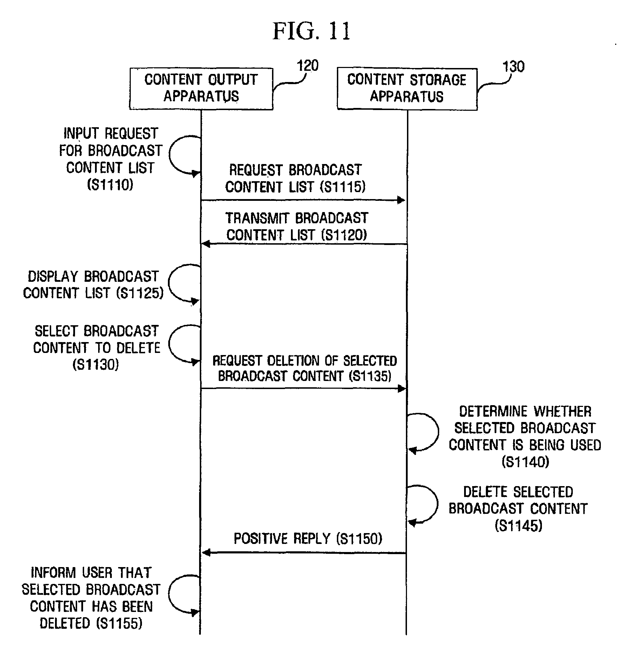

FIG. 11 is a flowchart illustrating a process of deleting broadcast content according to an exemplary embodiment of the present invention.

When desiring to delete broadcast content stored in the content storage apparatus 130, a user may request the content output apparatus 120 to provide a list of broadcast content stored in the content storage apparatus 130.

When the user inputs a request for the list of broadcast content (operation S1110), the content output apparatus 120 requests the content storage apparatus 130 to provide the list (operation S1115). In operation S1115, the content output apparatus 120 may generate a broadcast content list request message and transmit the generated broadcast content list request message to the content storage apparatus 130.

The content storage apparatus 130 transmits the list stored therein to the content output apparatus (operation S1120), and the content output apparatus 120 displays the received list (operation S1125). The user may select broadcast content to delete from the list displayed on the content output apparatus 120.

If the user selects broadcast content to delete (operation S1130), the content output apparatus 120 requests the content storage apparatus 130 to delete the selected broadcast content (operation S1135). In operation S1135, the content output apparatus 120 may generate a broadcast content deletion request message including information regarding the selected broadcast content (e.g., an identifier of the selected broadcast content) and transmit the generated broadcast content deletion request message to the content storage apparatus 130.

The content storage apparatus 130 determines whether the selected broadcast content is being used (for example, whether the selected broadcast content is being transmitted to another content output apparatus) (operation S1140). If the selected broadcast content is not being used, the content storage apparatus 130 deletes the selected broadcast content (operation S1145) and transmits to the content output apparatus 130 a positive reply to the request to delete the selected broadcast content (operation S1150). In operation S1150, the content storage apparatus 130 may generate a reply message indicating the successful deletion of the selected broadcast content and transmit the generated reply message to the content output apparatus 120.

The content output apparatus 120, which receives the reply message from the content storage apparatus 130, informs the user that the selected broadcast content has been deleted (operation S1155).

Although not shown in FIG. 11, if the content storage apparatus 130 determines in operation S 1140 that the selected broadcast content is being used, it may generate a reply message indicating that the selected broadcast content cannot be deleted because it is being used and transmit the generated reply message to the content output apparatus 120. In this case, the content output apparatus 120 may inform the user that the selected broadcast content cannot be deleted.

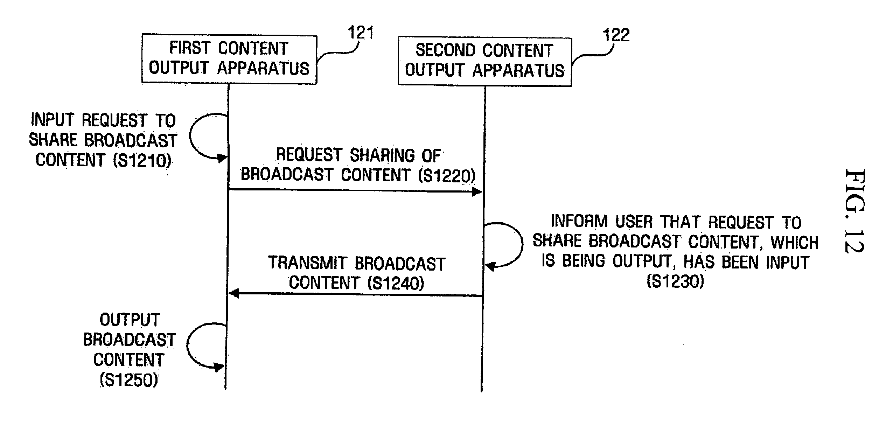

FIG. 12 is a flowchart illustrating a process of sharing broadcast content according to an exemplary embodiment of the present invention.

In the present exemplary embodiment, the first content output apparatus 121 outputs to a first user terrestrial broadcasts received through a first broadcast receiving apparatus (not shown), and the second content output apparatus 122 outputs to a second user satellite broadcasts received through a second broadcast receiving apparatus (not shown).

If the first user desires to monitor broadcast content that the second user is watching, the first user may request the first content output apparatus 121 to share broadcast content output from the second content output apparatus 122.

If the first user inputs a request to share the broadcast content being output from the second content output apparatus 122 (operation S 1210), the first content output apparatus 121 requests the second content output apparatus 122 to share the broadcast content (operation S1220). In operation S1220, the first content output apparatus 121 may generate a message for requesting the sharing of the broadcast content and transmit the generated message to the second content output apparatus 122.

The second content output apparatus 122, which is requested to share the broadcast content, provides the second user with information indicating that the first content output apparatus 121 has requested the sharing of the broadcast content (operation S1230). In addition, the second content output apparatus 122 transmits the broadcast content that it is outputting to the first content output apparatus 121 (operation S1240).

Accordingly, the first content output apparatus 121 outputs the broadcast content, which is being output from that the second content output apparatus 122, to the first user (operation S1250).

Even if the second content output apparatus 122 changes its source device, the first content output apparatus 121 can share broadcast content with the second content output apparatus 122. For example, if the second content output apparatus 122 closes an AV session with the second broadcast receiving apparatus and receives broadcast content from a content storage apparatus (not shown), it may not only output the received broadcast content but also transmit it to the first content output apparatus 121.

In the present exemplary embodiment, the first content output apparatus 121 operates as if in the passive mode. That is, the first content output apparatus 121 cannot control the source device of the second content output apparatus 122. Hence, the first content output apparatus 121 simply receives broadcast content currently being output from the second content output apparatus 122 and outputs the received broadcast content.

In addition, even when the second content output apparatus 122 operates in the passive mode for the second broadcast receiving apparatus, the exemplary embodiment of FIG. 12 can be implemented.

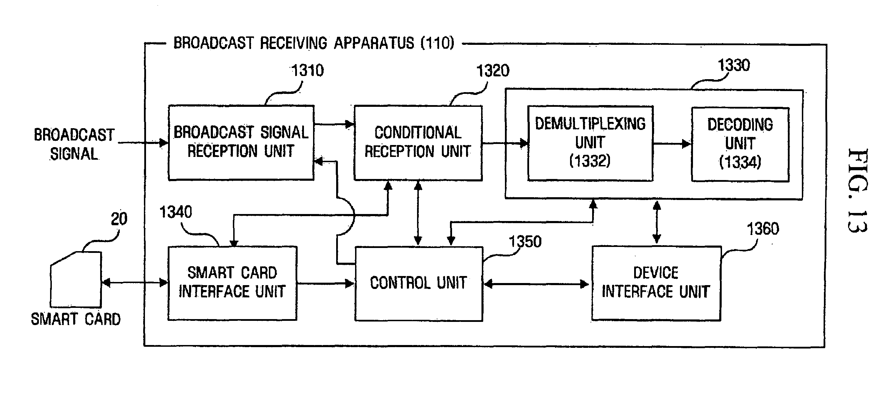

FIG. 13 is a block diagram of a broadcast receiving apparatus 110 according to an exemplary embodiment of the present invention. The first broadcast receiving apparatus 111 and the second broadcast receiving apparatus 112 may be configured the same as the broadcast receiving apparatus 110 illustrated in FIG. 13.

Referring to FIG. 13, the broadcast receiving apparatus 110 includes a broadcast signal reception unit 1310, a conditional reception unit 1320, a restoration unit 1330, a smart card interface unit 1340, a control unit 1350, and a device interface unit 1360.

The broadcast signal reception unit 1310 receives broadcast signals. In the present exemplary embodiment, the broadcast signal reception unit 1310 includes a tuner (not shown) and a demodulator (not shown).

The tuner receives broadcast signals of a channel selected by a user through a channel tuning operation, converts the received broadcast signals into intermediate frequencies, and provides the intermediate frequencies to the demodulator. For example, when the broadcast receiving apparatus 110 receives a satellite broadcast, the tuner may detect I and Q signals by processing signals received from a satellite and provide the detected I and Q signals to the demodulator.

The demodulator restores transport streams from the broadcast signals, which have been converted into the intermediate frequencies, and provides the restored transport streams to the conditional reception unit 1320. For example, the demodulator may be composed of a quadratic phase shift keying (QPSK) demodulator (not shown) and a forward error correction (FEC) demodulator (not shown) and can perform QPSK demodulation and FEC.

The conditional reception unit 1320 performs a user authentication operation using the smart card 20. More specifically, the conditional reception unit 1320 compares an authentication parameter, which is included in the transport streams provided by the demodulator, with another authentication parameter, which is provided by the smart card interface unit 1340 through the reading of the smart card 20, and determines whether the user of the broadcast receiving apparatus 110 has the right to receive a broadcast. If the two authentication parameters are identical to each other, the conditional reception unit 1320 may determine that the user has the right to receive the broadcast. If not, the conditional reception unit 1320 may determine that the user does not have the right to receive the broadcast.

As a result of the user authentication, if the conditional reception unit 1320 determines that the user has the right to receive the broadcast, it descrambles the transport streams. However, as a result of the user authentication, if the conditional reception unit 1320 determines that the user does not have the right, it does not descramble the transport streams. Consequently, the descrambling operation is performed on the broadcast signals of a channel for which the user has paid, whereas the descrambling operation is not performed on the broadcast signals of a channel for which the user has not paid.

The restoration unit 1330 restores the broadcast content using the transport streams descrambled by the conditional reception unit 1320. However, when the conditional reception unit 1320 does not descramble the transport streams, the restoration unit 1330 cannot normally restore the broadcast content included in the transport streams.

In order to restore the broadcast content, the restoration unit 1330 may include a demultiplexing unit 1332 and a decoding unit 1334.

The demultiplexing unit 1332 separates audio signals and video signals by parsing the transport streams descrambled by the conditional reception unit 1320, and outputs them to the decoding unit 1334.

The decoding unit 1334 includes a video decoder (not shown) and an audio decoder (not shown). The video and audio decoders respectively decode the video signals and audio signals provided by the demultiplexing unit 1332. The video decoder may be implemented using a video decompression method such as Moving Picture Experts Group (MPEG)-2 or MPEG-4. The audio decoder may be implemented using an audio decompression method such as MPEG Layer-3 Audio (MP3) or Audio Compression 3 (AC3).

The smart card interface unit 1340 reads the smart card 20 and provides an authentication parameter stored in the smart card 20 to the conditional reception unit 1320. According to an exemplary embodiment of the present invention, another type of portable storage medium that can store an authentication parameter, such as a secure digital (SD) card or a memory stick, may also be used in place of the smart card 20. In this case, the smart card interface unit 1340 may be replaced with an interface unit that can be connected to a corresponding portable storage medium.

The control unit 1350 controls each component of the broadcast receiving apparatus 110 to perform an operation requested by another AV apparatus. In addition, the control unit 1350 may interpret messages transmitted from other AV apparatuses and generate messages to be transmitted to the AV apparatuses. Messages processed by the control unit 1350 denote messages generated or received by the broadcast receiving apparatuses 110, 111 and 112 illustrated in FIGS. 2 through 12.

The device interface unit 1360 communicates with other AV apparatuses via a wired or wireless medium. More specifically, the device interface unit 1360 may transmit the broadcast content restored by the restoration unit 1330 to other AV apparatuses. Furthermore, the device interface unit 1360 may transmit messages generated by the control unit 1350 to the AV apparatuses and receive messages from the AV apparatuses. According to an exemplary embodiment of the present invention, the device interface unit 1360 may include a plurality of sub-interface units (not shown). In this case, broadcast content and messages may be transmitted from different sub-interface units. Also, a different sub-interface unit may be used for communication with each of the AV apparatuses.

According to an exemplary embodiment of the present invention, the device interface unit 1360 may transmit broadcast content, which is not decoded by the decoding unit 1334, to other AV apparatuses. This is possible only when each of the AV apparatuses includes a component corresponding to the decoding unit 1334 and thus can decode the received broadcast content using the component.

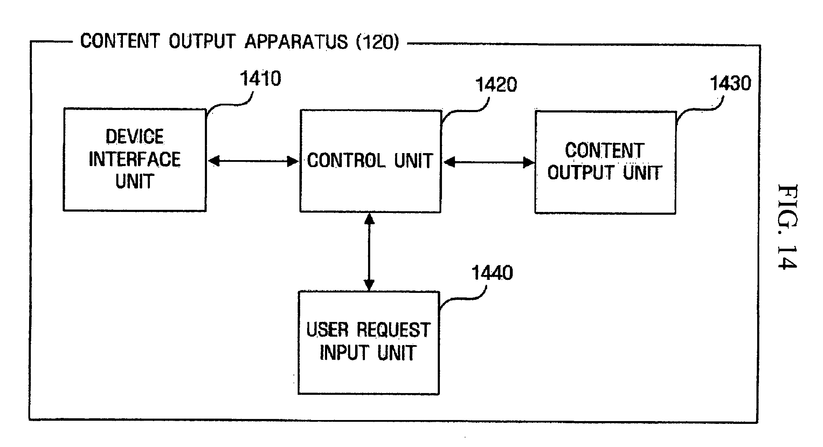

FIG. 14 is a block diagram of the content output apparatus 120 according to an exemplary embodiment of the present invention. The first content output apparatus 121 and the second content output apparatus 122 may be configured the same as the content output apparatus 120 illustrated in FIG. 14.

Referring to FIG. 14, the content output apparatus 120 includes a device interface unit 1410, a control unit 1420, a content output unit 1430, and a user request input unit 1440.

The device interface unit 1410 communicates with other AV apparatuses via a wired or wireless medium. More specifically, the device interface unit 1410 receives broadcast content from other AV apparatuses. Furthermore, the device interface unit 1410 may transmit broadcast content being output from the content output unit 1430 to the AV apparatuses. The device interface unit 1410 may transmit messages generated by the control unit 1420 to the AV apparatuses and receive messages from the AV apparatuses. According to an exemplary embodiment of the present invention, the device interface unit 1410 may include a plurality of sub-interface units (not shown). In this case, broadcast content and messages may be transmitted from different sub-interface units. Also, a different sub-interface unit may be used for communication with each of the AV apparatuses.

The control unit 1420 controls each component of the content output apparatus 120 to perform an operation requested by another AV apparatus or a user. In addition, the control unit 1420 may interpret messages transmitted from other AV apparatuses and generate messages to be transmitted to the AV apparatuses. Messages processed by the control unit 1420 denote messages generated or received by the content output apparatuses 120, 121 and 122 illustrated in FIGS. 2 through 12. Further, the control unit 1420 may provide a user interface, which guides the control of an AV network, and set an operating mode of the content output apparatus 1440.

The content output unit 1430 outputs the broadcast content received by the device interface unit 1410 to the user. To this end, the content output unit 1430 may include a speaker (not shown) and a display (not shown). The content output apparatus 1430 may display the user interface provided by the control unit 1420.

The user request input unit 1440 receives control commands from the user. For this, the user request input unit 1440 may provide an input unit (not shown), such as a keypad, a touch screen or the like. Alternatively, the user request input unit 1440 may include a wireless signal reception unit (not shown), which can receive control signals of a remote control, such as an infrared (IR) receiver or a Bluetooth module.

Although not shown in FIG. 14, the content output apparatus 120 according to an exemplary embodiment of the present invention may further include a decoding unit decoding encoded broadcast content. In this case, when broadcast content, which is not decoded, is received from another AV apparatus, the content output apparatus 120 can decode the received broadcast content using the decoding unit.

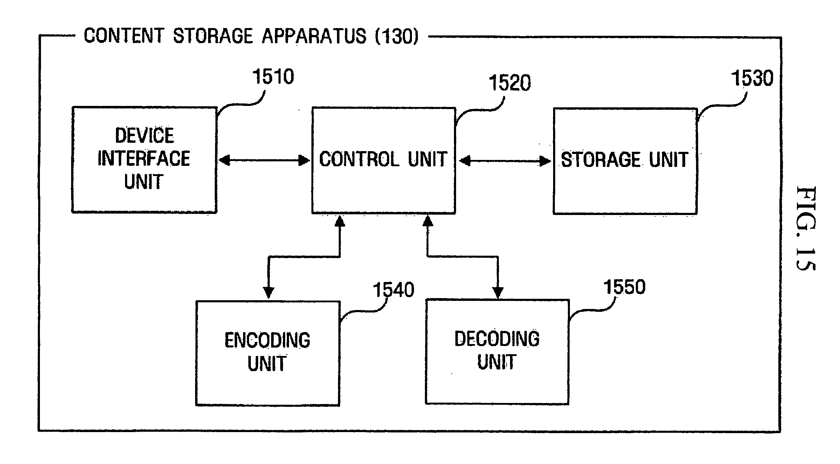

FIG. 15 is a block diagram of the content storage apparatus 130 according to an exemplary embodiment of the present invention. Referring to FIG. 15, the content storage apparatus 130 includes a device interface unit 1510, a control unit 1520, a storage unit 1530, an encoding unit 1540, and a decoding unit 1550.

The device interface unit 1510 communicates with other AV apparatuses via a wired or wireless medium. More specifically, the device interface unit 1510 receives broadcast content from other AV apparatuses. Furthermore, the device interface unit 1510 may transmit broadcast content stored in the storage unit 1530 to the AV apparatuses. The device interface unit 1510 may transmit messages generated by the control unit 1520 to the AV apparatuses and receive messages from the AV apparatuses. According to an exemplary embodiment of the present invention, the device interface unit 1510 may include a plurality of sub-interface units (not shown). In this case, a different sub-interface unit may be used for communication with each of the AV apparatuses.

The control unit 1520 controls the operation of each functional block of the content storage apparatus 130.

The storage unit 1530 stores the broadcast content transmitted from the broadcast receiving apparatus 110. The broadcast content stored in the storage unit 1530 may be encoded using an AV data compression method, such as MPEG-2, MPEG-4, MP3 or AC3. The broadcast content may have been encoded before being transmitted from the broadcast receiving apparatus 110. However, when decoded broadcast content is transmitted from the broadcast receiving apparatus 110, the encoding unit 1540 may encode the decoded broadcast content and store the encoded broadcast content in the storage unit 1530.

The decoding unit 1550 may decode broadcast content to be transmitted to another AV apparatus among the broadcast content stored in the storage unit 1530. However, there could also be an exemplary embodiment in which the decoding unit 1550 does not decode broadcast content to be transmitted to another AV apparatus. The AV data decompression method used by the decoding unit 1550 corresponds to the AV data compression method used by the encoding unit 1540.

The 'unit', as used herein to indicate each component included in the exemplary embodiments of FIGS. 13 through 15, may be implemented as a module.

The term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

### Industrial Applicability

As described above, a method and apparatus for managing an AV network which is composed of a plurality of AV apparatuses can be more efficiently managed.

While the present invention has been particularly shown and described with reference to exemplary embodiments thereof, it will be understood by those of ordinary skill in the art that various changes in form and details may be made therein without departing from the scope of the present invention as defined by the following claims. The exemplary embodiments should be considered in descriptive sense only and not for purposes of limitation.

## Claims

1. A method of managing an audio/video network, with the acronym AV being used herein to signify the term audio/video, the method comprising:
requesting a broadcast receiving apparatus to form an AV session (S210);
receiving a reply from the broadcast receiving apparatus (S220); and
setting an operating mode for a content output apparatus using information included in the reply (S225),
wherein the operating mode is set as one of an active mode with authority to control the broadcast receiving apparatus and a passive mode without authority to control the broadcast receiving apparatus, and an AV session broadcast between the broadcast receiving apparatus and the content output apparatus is established.

2. The method of claim 1, further comprising outputting the operating mode from the content output apparatus to a user (S230).

3. The method of claim 1, wherein the operating mode is set to the active mode if no content output apparatus has already formed an AV session with the broadcast receiving apparatus; and
wherein if another content output apparatus has already formed an AV session with the broadcast receiving apparatus the operating mode of the content output apparatus is set to the passive mode.

4. The method of claim 1, further comprising, if the operating mode is the passive mode when a request to control the broadcast receiving apparatus is input, outputting to the user at least one of information indicating that the broadcast receiving apparatus cannot be controlled and information indicating that the operating mode is the passive mode.

5. The method of claim 4, wherein the request to control the broadcast receiving apparatus comprises at least one of a channel switch request, a time shift function request, and a broadcast content storage request.

6. An apparatus of managing an audio/video network, with the acronym AV being used herein to signify the term audio/video, the apparatus comprising:
a device interface unit (1410) configured to request a broadcast receiving apparatus to form an AV session, and to receive a reply from the broadcast receiving apparatus; and
a control unit (1420) configured to set an operating mode for a content output apparatus using information included in the reply,
wherein the operating mode is set as one of an active mode with authority to control the broadcast receiving apparatus and a passive mode without authority to control the broadcast receiving apparatus, and an AV session broadcast between the broadcast receiving apparatus and the content output apparatus is established.

7. The apparatus of claim 6, further comprising an output unit (1430) configured to output the operating mode from the content output apparatus to a user.

8. The apparatus of claim 6, wherein the operating mode is set to the active mode if no content output apparatus has already formed an AV session with the broadcast receiving apparatus; and
wherein if another content output apparatus has already formed an AV session with the broadcast receiving apparatus the operating mode of the content output apparatus is set to the passive mode.

9. The apparatus of claim 6, further comprising an output unit (1430) configured, if the operating mode is the passive mode when a request to control the broadcast receiving apparatus is input, to output to the user at least one of information indicating that the broadcast receiving apparatus cannot be controlled and information indicating that the operating mode is the passive mode.

10. The apparatus of claim 9, wherein the request to control the broadcast receiving apparatus comprises at least one of a channel switch request, a time shift function request, and a broadcast content storage request.

## Patentansprüche

1. Verfahren für das Management eines Audio/Video-Netzes, wobei hier die Abkürzung AV verwendet wird, um den Ausdruck Audio/Video zu bezeichnen, wobei das Verfahren Folgendes umfasst:
- Auffordern einer Rundsendeempfangsvorrichtung, eine AV-Sitzung (S210) zu bilden;
- Empfangen einer Antwort von der Rundsendeempfangsvorrichtung (S220); und
- Einstellen einer Betriebsart für eine Inhaltsausgabevorrichtung unter Verwendung von Informationen, die in der Antwort enthalten sind (S225),
- wobei die Betriebsart entweder als aktive Betriebsart mit der Berechtigung, die Rundsendeempfangsvorrichtung zu steuern, oder als eine passive Betriebsart ohne Berechtigung, die Rundsendeempfangsvorrichtung zu steuern, eingestellt wird und eine AV-Sitzungsrundsendung zwischen der Rundsendeempfangsvorrichtung und der Inhaltsausgabevorrichtung aufgebaut wird.

2. Verfahren nach Anspruch 1, das ferner das Ausgeben der Betriebsart von der Inhaltsausgabevorrichtung an einen Anwender umfasst (S230).

3. Verfahren nach Anspruch 1, wobei die Betriebsart auf die aktive Betriebsart eingestellt wird, falls keine Inhaltsausgabevorrichtung bereits eine AV-Sitzung mit der Rundsendeempfangsvorrichtung gebildet hat; und wobei dann, wenn eine weitere Inhaltsausgabevorrichtung bereits eine AV-Sitzung mit der Rundsendeempfangsvorrichtung gebildet hat, die Betriebsart der Inhaltsausgabevorrichtung auf die passive Betriebsart eingestellt wird.

4. Verfahren nach Anspruch 1, das ferner dann, wenn die Betriebsart die passive Betriebsart ist und eine Aufforderung, die Rundsendeempfangsvorrichtung zu steuern, eingegeben wird, das Ausgeben an den Anwender wenigstens von Informationen, die angeben, dass die Rundsendeempfangsvorrichtung nicht gesteuert werden kann, und/oder von Informationen, die angeben, dass die Betriebsart die passive Betriebsart ist, umfasst.

5. Verfahren nach Anspruch 4, wobei die Aufforderung, die Rundsendeempfangsvorrichtung zu steuern, eine Kanalschaltanforderung und/oder eine Timeshift-Funktion-Anforderung und/oder eine Rundsendeinhaltsspeicherungs-Anforderung umfasst.

6. Vorrichtung für das Management eines Audio/Video-Netzes, wobei die Abkürzung AV hier verwendet wird, um den Ausdruck Audio/Video zu bezeichnen, wobei die Vorrichtung Folgendes umfasst:
- eine Vorrichtungsschnittstelleneinheit (1410), die konfiguriert ist, eine Rundsendeempfangsvorrichtung aufzufordern, eine AV-Sitzung zu bilden, und eine Antwort von der Rundsendeempfangsvorrichtung zu empfangen; und
- eine Steuereinheit (1420), die konfiguriert ist, eine Betriebsart für eine Inhaltsausgabevorrichtung unter Verwendung von Informationen, die in der Antwort enthalten sind, einzustellen,
- wobei die Betriebsart entweder als aktive Betriebsart mit der Berechtigung, die Rundsendeempfangsvorrichtung zu steuern, oder als passive Betriebsart ohne Berechtigung, die Rundsendeempfangsvorrichtung zu steuern, eingestellt wird und eine AV-Sitzungsrundsendung zwischen der Rundsendeempfangsvorrichtung und der Inhaltsausgabevorrichtung aufgebaut wird.

7. Vorrichtung nach Anspruch 6, die ferner eine Ausgabeeinheit (1430) umfasst, die konfiguriert ist, die Betriebsart von der Inhaltsausgabevorrichtung an einen Anwender auszugeben.

8. Vorrichtung nach Anspruch 6, wobei die Betriebsart auf die aktive Betriebsart eingestellt wird, falls keine Inhaltsausgabevorrichtung bereits eine AV-Sitzung mit der Rundsendeempfangsvorrichtung gebildet hat; und wobei dann, wenn eine weitere Inhaltsausgabevorrichtung bereits eine AV-Sitzung mit der Rundsendeempfangsvorrichtung gebildet hat, die Betriebsart der Inhaltsausgabevorrichtung auf die passive Betriebsart eingestellt wird.

9. Vorrichtung nach Anspruch 6, die ferner eine Ausgabeeinheit (1430) umfasst, die konfiguriert ist, dann, wenn die Betriebsart die passive Betriebsart ist und eine Aufforderung zum Steuern der Rundsendeempfangsvorrichtung eingegeben wird, zu dem Anwender Informationen, die angeben, dass die Rundsendeempfangsvorrichtung nicht gesteuert werden kann, und/oder Informationen, die angeben, dass die Betriebsart die passive Betriebsart ist, auszugeben.

10. Vorrichtung nach Anspruch 9, wobei die Aufforderung, die Rundsendeempfangsvorrichtung zu steuern, eine Kanalschaltaufforderung und/oder eine Timeshift-Funktion-Aufforderung und/oder eine Rundsendeinhaltsspeicherungs-Aufforderung umfasst.

## Revendications

1. Procédé de gestion de réseau audio/vidéo, l'acronyme AV étant présentement utilisé pour renvoyer au terme audio/vidéo, lequel procédé consiste à :
demander à un appareil de réception de diffusion de former une session AV (S210) ;
recevoir une réponse de l'appareil de réception de diffusion (S220) ; et
définir un mode de fonctionnement pour un appareil d'émission de contenu en utilisant les informations comprises dans la réponse (S225) ;
dans lequel le mode de fonctionnement est défini comme étant l'un d'un mode actif avec autorité de commander l'appareil de réception de diffusion et d'un mode passif sans autorité de commander l'appareil de réception de diffusion, et une diffusion de session AV entre l'appareil de réception de diffusion et l'appareil d'émission de contenu est établie.

2. Procédé selon la revendication 1, consistant en outre à émettre le mode de fonctionnement depuis l'appareil d'émission de contenu vers un utilisateur (S230).

3. Procédé selon la revendication 1, dans lequel le mode de fonctionnement est défini comme étant le mode actif si aucun appareil d'émission de contenu n'a encore formé de session AV avec l'appareil de réception de diffusion, et
dans lequel, si un autre appareil d'émission de contenu a déjà formé un session AV avec l'appareil de réception de diffusion, le mode de fonctionnement de l'appareil d'émission de contenu est défini comme étant le mode passif.

4. Procédé selon la revendication 1, consistant en outre, si le mode de fonctionnement est le mode passif lorsqu'une demande de commande de l'appareil de réception de diffusion est entrée, à émettre vers l'utilisateur l'une au moins d'une information indiquant que l'appareil de réception de diffusion ne peut pas être commandé et d'une information indiquant que le mode de fonctionnement est le mode passif.

5. Procédé selon la revendication 4, dans lequel la demande de commande de l'appareil de réception de diffusion comprend l'une au moins d'une demande de commutation de canal, d'une demande de fonction de décalage temporel et d'une demande de stockage de contenu de diffusion.

6. Appareil de gestion de réseau audio/vidéo, l'acronyme AV étant présentement utilisé pour renvoyer au terme audio/vidéo, lequel appareil comprend :
une unité d'interface de dispositif (1410) conçue pour demander à un appareil de réception de diffusion de former une session AV, et pour recevoir une réponse de l'appareil de réception de diffusion ; et
une unité de commande (1420) conçue pour définir un mode de fonctionnement pour un appareil d'émission de contenu en utilisant les informations comprises dans la réponse ;
dans lequel le mode de fonctionnement est défini comme étant l'un d'un mode actif avec autorité de commander l'appareil de réception de diffusion et d'un mode passif sans autorité de commander l'appareil de réception de diffusion, et une diffusion de session AV entre l'appareil de réception de diffusion et l'appareil d'émission de contenu est établie.

7. Appareil selon la revendication 6, comprenant en outre une unité d'émission (1430) conçue pour émettre le mode de fonctionnement depuis l'appareil d'émission de contenu vers un utilisateur.

8. Appareil selon la revendication 6, dans lequel le mode de fonctionnement est défini comme étant le mode actif si aucun appareil d'émission de contenu n'a encore formé de session AV avec l'appareil de réception de diffusion, et
dans lequel, si un autre appareil d'émission de contenu a déjà formé une session AV avec l'appareil de réception de diffusion, le mode de fonctionnement de l'appareil d'émission de contenu est défini comme étant le mode passif.

9. Appareil selon la revendication 6, comprenant en outre une unité d'émission (1430) conçue, si le mode de fonctionnement est le mode passif lorsqu'une demande de commande de l'appareil de réception de diffusion est entrée, pour émettre vers l'utilisateur l'une au moins d'une information indiquant que l'appareil de réception de diffusion ne peut pas être commandé et d'une information indiquant que le mode de fonctionnement est le mode passif.

10. Appareil selon la revendication 9, dans lequel la demande de commande de l'appareil de réception de diffusion comprend l'une au moins d'une demande de commutation de canal, d'une demande de fonction de décalage temporel et d'une demande de stockage de contenu de diffusion.
